# EUROPEAN PATENT APPLICATION

(11) **EP 1 229 512 A2**
(43) Date of publication of application: **07.08.2002**
(21) Application number: 02250668.7
(22) Date of filing: 31.01.2002
(51) Int. Cl.: G09G 5/14

(54) **Moving picture playback method and apparatus with the use of windows**

(30) Priority: 31.01.2001 JP 2001024479
(71) Applicant: Kabushiki Kaisha Toshiba, Tokyo 105-8001 (JP)
(72) Inventor: Zettsu, Tatsuya, Tokyo 105-8001 (JP); Toru, Imai, Minato-ku Tokyo 105-8001 (JP)
(74) Representative: Midgley, Jonathan Lee

(57) **Abstract**

A moving picture playback method comprises forming a first window based on a software, forming a second window as a child window of the first window on the first window, forming a third window as a child window of the second window within the second window, setting a shape of each frame of the moving picture on the second window, and drawing a picture of the frame on the third window.

## Description

The present invention relates to a moving picture playback method and apparatus which plays back a moving picture and superimposes on it a display picture based on software executed in a window managed by a window system.

An apparatus which displays documents including plural media such as a character, a still picture and a moving picture, and interactively responds to the input of a user has been developed. For example, HTML (HyperText Markup Language) is broadly used as a format describing a document provided by the WWW (World Wide Web). Software for displaying such an HTML document has also been developed, i.e., the web browser.

An arrangement of configuration elements of a document can be specified in HTML by using CSS (Cascading Style Sheets). A display position and size of an individual configuration element of documents such as a character or a still picture can be set. These configuration elements can be superimposed and displayed.

The web browser has a function to add software called plug-in to display the media that a built-in display function of the web browser does not support. The software driving the plug-in can play back a moving picture whose encoding and transmission method do not correspond to the software by using the plug-in. Generally the plug-in is used in order to expand a function of a software on which the plug-in is added. Data of the kind that does not correspond to the software can be drawn on a predetermined region of the picture drawn by the software.

The methods that software A performing a display to a certain window drives a plug-in B, and the plug-in B performs a display on the display formed by the software A are as follows.
(a) A method of drawing, by means of the plug-in B, directly on a window displayed by the software.
(b) A method of generating, by means of the software A, a window corresponding directly or indirectly to a child window of the window displayed by the software A and allocating the child window as a region where the plug-in B draws.

These methods have the problem that a display is disturbed when the shape of the picture displayed by the plug-in B changes and a non-rectangular arbitrary shape is generated.

In the method (a), when the moving picture is played back by the plug-in B, the shape of every frame of the moving picture changes with playback of the moving picture. As a result, the display screen formed by the software A is disturbed by the moving picture whose shape changes. In other words, when the shape of the moving picture changes, a part of the picture already drawn before the shape change of the moving picture is deviated from a range of the frame after the shape change. In this case, the picture already drawn is not overwritten by a new picture but partly remains. As a result, a state that the display picture formed by the software A is overwritten appears.

In the method (b), the display picture of the window drawn by the software A is hidden by a child window allocated to the plug-in B. Thus, the moving picture is displayed being superimposed on the child window. By this method, a rectangle can only be used for the window drawn by the plug-in B. In other words, even if the plug-in B sets the shape of the child window in a non-rectangle, when the software A changes an arrangement of the window formed by the plug-in B or the software A changes size of the window to be drawn by the software A, the shape of the window allocated to the plug-in B is often returned to a rectangle. In this case, when the moving picture playback is paused, the moving picture cannot be accurately displayed.

For the purpose of avoiding the above problems, a method in which a window independent of the window to be drawn by the software A is used as a display screen of the plug-in B is conceivable. However, this method cannot change the display picture formed by the plug-in B according to movement of the display picture formed by the software A. For example, when a display region of the window based on the software A is overlapped by a window based on another software, or the window based on the software A is scrolled, a part or all of the display screen based on the plug-in B should be hidden. However, the moving picture remains on the part to be hidden. Further, there is a problem that the display formed by the plug-in B is not changed adequately when a position and size of the window formed by the software A change.

The first aspect of the present invention provides a moving picture playback method of playing back a moving picture including a plurality of frames comprising: forming a first window based on a predetermined software; forming a second window as a child window of the first window on the first window; forming a third window as a child window of the second window within the second window; setting a shape of each of the frames of the moving picture on the second window; and drawing a picture of the frame having the shape set on the second window on the third window.

The second aspect of the present invention provides a moving picture playback apparatus which plays back a moving picture including a plurality of frames comprising: an input device configured to input shape information and color information of the moving picture every frame; a window system configured to generate a first window based on a software, a second window corresponding to a child window of the first window and superimposed on the first window and a third window corresponding to a child window of the second window; a shape setting device configured to set a shape of each of the frames of the moving picture on the second window; a drawing device configured to draw a picture of the frame having the shape set on the second window on the third window; and a controller which controls the shape setting device and the drawing device according to a message relative to the second window and third window from the window system to set the shape of each frame on the second window and draw the picture of the frame on the third window.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

The third aspect of the present invention provides a moving picture playback program recorded on a computer readable medium, the program comprising: means for instructing a computer to form a first window; means for instructing the computer to form a second window as a child window of the first window on the first window; means for instructing the computer to form a third window as a child window of the second window; means for instructing the computer to set a shape of each of the frames of the moving picture on the second window; and means for instructing the computer to draw a picture of the frame having the shape set on the second window on the third window.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a block diagram of a moving picture playback apparatus related to an embodiment of the present invention;
FIG. 2 shows a display screen created by a moving picture playback apparatus related to the embodiment;
FIG. 3 shows first to third windows managed by a moving picture playback apparatus related to the embodiment.
FIG. 4 shows a flow of a basic process of a controller included in the moving picture playback apparatus of the embodiment;
FIG. 5 shows a flow of a process of a controller based on a message from a window system.
FIG. 6 shows a flow of a process of a controller, a shape setting device and a drawing device in a normal moving picture playback;
FIGS. 7A and 7B show a playback moving picture and a shape of each frame of the moving picture;
FIG. 8 shows a flow of a process of a controller, a shape setting device and a drawing device in pause in a moving picture playback;
FIGS. 9A and 9B show a display screen and a window in scroll;
FIGS. 10A and 10B show a display screen and a window in scroll; and
FIGS. 11A and 11B show a display screen and a window in scroll.

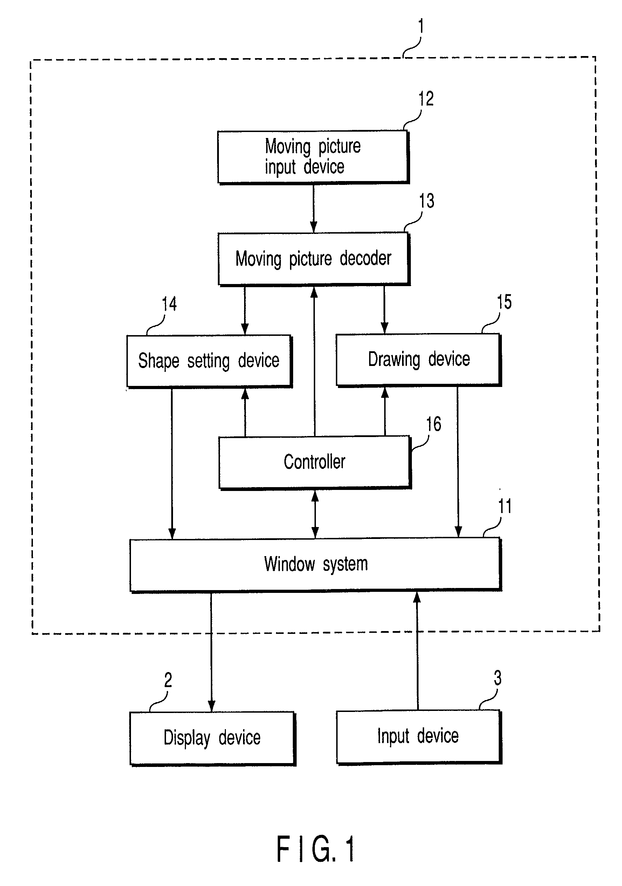

FIG. 1 shows a configuration of a moving picture playback apparatus (video playback apparatus) according to an embodiment of the present invention. This moving picture playback apparatus 1 comprises a window system 11, a moving picture input device 12, a moving picture decoder (video decoder) 13, a shape setting device 14, a drawing device 15 and a controller 16. The moving picture playback apparatus 1 is connected to a display device 2 such as a CRT display or liquid crystal display and an input device 3 such as a mouse and keyboard.

The window system 11 manages plural windows including first to third windows (described hereinafter), outputs screen information of each window to the display unit 2, and notifies a predetermined window of an input from the input device 3. When the window system 11 displays plural windows, it can display them by overlapping them one on another. The window system 11 comprises hardware including parts such as a processor, a memory and a graphic card and software executed by the hardware.

The moving picture input device 12 inputs encoded moving picture data (encoded video data) obtained by encoding moving picture data formed of a series of plural frames with the MPEG-4 or another moving picture encoding method (video encoding method). The moving picture data may be a set of still pictures of a series of plural frames formed of plural color components such as RGB or YUV. The moving picture input device 12 reads encoded moving picture data recorded on a hard disk, DVD, another recording media or communicates with a network connected to the moving picture playback apparatus, to obtain encoded moving picture data.

The moving picture decoder 13 decodes the encoded moving picture data input by the moving picture input device 12, to obtain shape information and color information of every frame of the moving picture. The shape information comprises, for example, information indicating pixel positions of the picture of each frame constructing the moving picture and information indicating whether each pixel shows transparency or opacity. The color information comprises, for example, information representing pixel positions of the picture of each frame and information indicating the color of each pixel. The pixel position information can specify the shape of the picture by coordinates, for example, as described hereinafter. The shape can be expressed by the number of pixels of rows and columns of the picture with respect to a reference coordinate, for example. When the shape information and color information are determined as described above, the shape of each frame constructing the moving picture is determined by a pixel position of information indicating opacity included in the shape information. Further, drawing is performed according to a pixel color corresponding to the color information at a position of the pixel considered to be opaque according to the shape information.

The moving picture input device 12 may be a device that inputs shape information and color information of the moving picture, or may have a function of inputting moving picture data after decoding or moving picture data which is not compressed, and generating the shape information and color information from this moving picture data. In this case, the moving picture decoder 13 is unnecessary.

When the shape setting device 14 sends an instruction to the window system 11, it sets the shape of each frame of the moving picture based on the shape information input by the moving picture decoder 13 on the second window designated by the controller 16.

When the drawing device 15 sends an instruction to the window system 11, it draws a picture of a frame whose shape is set by the shape setting device 14 on the third window designated by the controller 16, according to the color information input by the moving picture decoder 13.

The controller 16 controls playback of the moving picture by sending instructions to the moving picture decoder 13, shape setting device 14 and drawing device 15. Concretely, the controller 16 designates the second window on which the shape of the moving picture should be set, to the shape setting device 14. Further, the controller 16 designates the third window to be drawn with the moving picture to the drawing device 15. Furthermore, the controller 16 receives a message regarding the third window from the window system 11, and executes a process according to the message.

The moving picture input device 12, moving picture decoder 13, shape setting device 14, drawing device 15 and controller 16 comprise hardware including parts such as a processor and a memory and software executed by the hardware. The moving picture input device 12 may be provided with a recording medium, a reading device and a network interface at needed. The window system 11 may be loaded on the same device as other configuration devices in the moving picture playback apparatus 1 or another device.

There will now be described an operation for playing back a moving picture using the moving picture playback apparatus 1 of the present embodiment. A method of use of the window system 11 to playback the moving picture is described first.

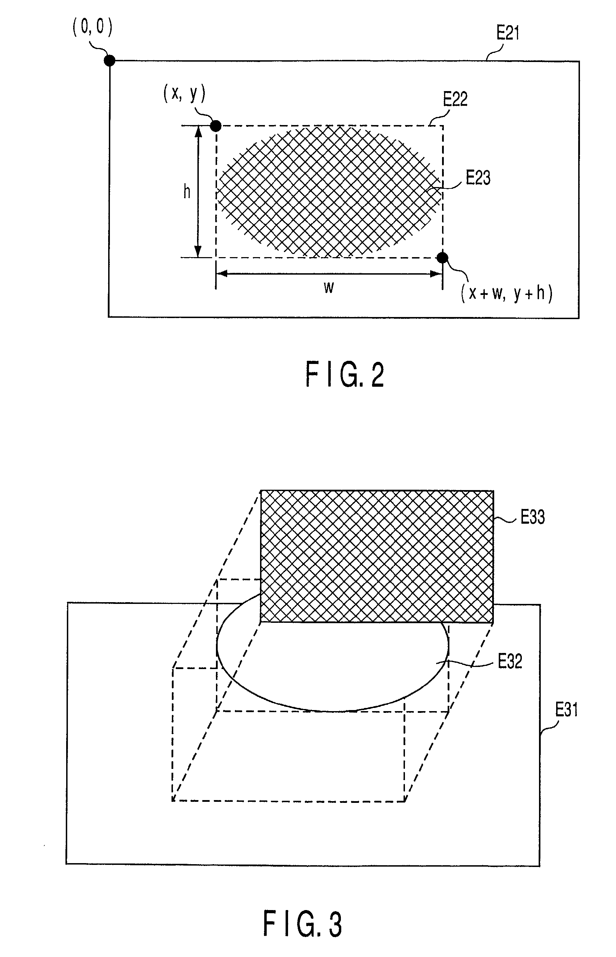

FIG. 2 shows a state in which the moving picture played-back by the plug-in B is superimposed on a display screen E21 based on a certain application software, for example, software A and displaying it. The display screen E21 is for superimposing a moving picture display E23, and includes contents such as a character and a still picture.

The rectangular region E22 shows a display region for displaying a moving picture to be played-back by the plug-in B on the display screen E21. For example, when the moving picture is superimposed on the configuration elements such as a character or a still picture constructing a HTML document displayed on the display screen E21, an arrangement of the rectangular region E22 corresponding to the display region of the moving picture may be designated using CSS. In an example of FIG. 2, the upper left corner of the display screen E21 is determined as a reference coordinate (0, 0). The rectangular region E22 having a upper left corner at a position of x pixels in a left direction from the reference coordinate (0, 0) and y pixels in a downward direction therefrom is arranged on the screen E21. This rectangular region has a width of w pixels and a height of h pixels. When the coordinate is described as (a, b), a indicates a coordinate value of a horizontal direction (left-and right-hand), and b expresses a coordinate value of a vertical direction (a top and bottom direction).

According to the present embodiment, a moving picture is displayed on the moving picture display region E23 in the rectangular region E22 superimposed on the display screen E21 based on the software A. In this moving picture display region E23, the shape of each frame of the moving picture and drawn contents change according to playback of the moving picture. In FIG. 2, the moving picture display region E23 is a non-rectangle (an oval, for example). A range of the moving picture display region E23 is limited to that of the rectangular region E22. In the display screen E21, a region outside the rectangular region E22 and a region belonging to the rectangular region E22 and the outside of the shape of the moving picture of the moving picture display region E23 display the contents (a character or a still picture) based on the software A. As the shape of the moving picture changes according to the playback of the moving picture, the moving picture display region E23 and the region of the display screen E21 on which the contents based on the software A is displayed change with time.

The software A draws the display screen E21 as described above. Furthermore, the software A drives the plug-in B in order to play back the moving picture, and defines the rectangular region E22 as a drawing region based on the plug-in B. The plug-in B performs setting of the shape of the moving picture display region E23 and drawing. The software A and plug-in B can be executed in the hardware constructing the moving picture playback apparatus 1 similarly to the configuration elements of the moving picture playback apparatus 1.

Generally, in the software executed by the window system, the displaying can be performed by allocating a window to the software and drawing a picture on the window. The window system moves and resizes a window and changes order in which windows are overlapped according to a user input apart from execution of software. In this case, the moving picture display E23 must be displayed as a part of the display screen E21.

The window system has a function to keep parent and child relation to plural windows as follows. The display region of the child window is basically limited to a range of the display region of the parent window. The child window need not be completely included within the parent window, and whole or part of the display region of the child window has only to be included in the display region of the parent window. The drawing of the child window is performed by overwriting drawing contents at the same position (coordinate) as the child window within the parent window. When the parent window moves, the child window moves in association with the parent window with a relative position between the parent window and the child window being kept. When the parent window is hidden by the other window that has no parent-child relation with the former window, the child window is hidden in the other window alike.

The window system 11 in the present embodiment has the above function, too. The present embodiment employs three windows E31, E32 and E33 as shown in FIG. 3 in order to display the moving picture by means of the window system 11. The software A draws the contents of the display screen E21 of FIG. 2 in the first window E31. The second window E32 is a child window of the first window E31. The third window E33 is a child window of the second window E32. The second window E32 is generated by the software A and allocated to the plug-in B. The third window E33 can be generated by either of the software A or plug-in B.

In FIG. 3, the region on which the moving picture is displayed is a set of the product of a region of the second window E32 with that of the third window E33, and further a set of the product of the set of the product with a region of the first window E31. In other words, the region on which the moving picture is displayed has a non-rectangular shape shown by the second window E32. The color information of the moving picture is drawn within the moving picture display region of the second window E32 and on the third window E33. The drawing content for the third window E33 is displayed within the moving picture display region of the second window E32. Drawing is not performed outside the moving picture display region, that is, a range of the moving picture shape by the window system 11. The original drawing content of the first window E31 is displayed outside the moving picture display region. As a result, the first, the second and the third window E31, E32 and E33 are displayed on the display unit 3 as E21, E22 and E23 by window system 11 as shown in FIG. 2.

When the shape of the moving picture to be played-back changes every frame, the shape change of the moving picture is reflected in a moving picture display by changing the shape of the second window E32. When the color information of the moving picture to be displayed changes, the third window E33 is again drawn according to the color information. As a result, the change of the color information is reflected in the moving picture display. In the present embodiment, the first window E31 displays in superimposition the moving pictures to be played back every frame. The shape of each frame of the moving picture is set on the first window E32 corresponding to the child window of the first window E31. The shape of the second window E32 is set on the third window E33 corresponding to the child window of the first window E32. In this way the picture of each frame is drawn.

According to the present embodiment, even if the shape of the moving picture changes or the moving picture is a non-rectangle, the display screen formed on the first window E31 based on the software A is not disturbed. Thus, the moving picture can be accurately played-back on this display screen. Even if the display screen of the first window E31 based on the software A seems to be scrolled, the moving picture display can be performed adequately.

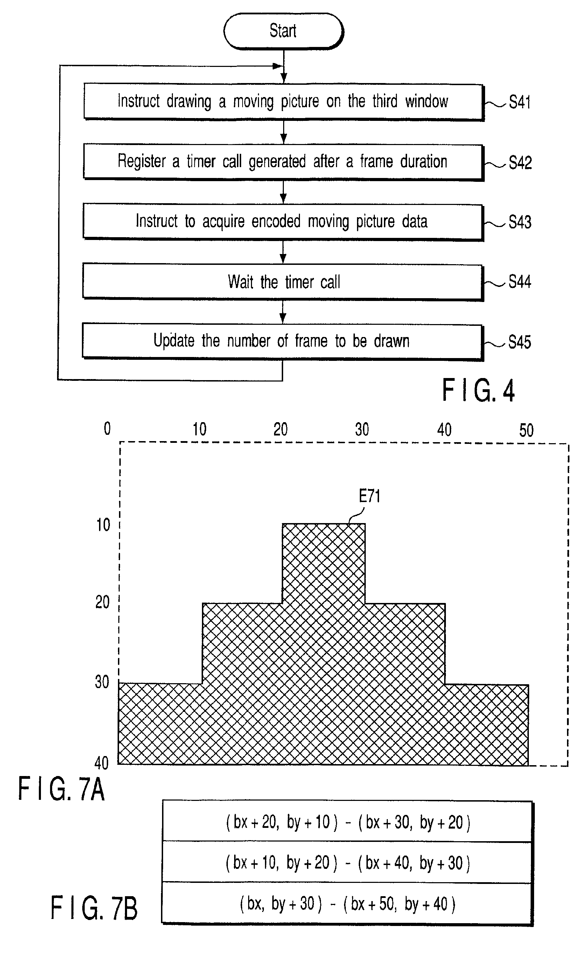

There will now be described a concrete process procedure to play back a moving picture in a window configuration of FIG. 3 in conjunction with FIG. 4.

Firstly, an initialization process to play back the moving picture is performed. In the initialization process, a controller 16 acquires from the window system 11 a message regarding the second window E32 and the third window E33 to perform shape setting and drawing of each frame of the moving picture. When the first and second windows E32 and E33 are not allocated to the plug-in B by the software A, the controller 16 acquires information of the windows by making the window system 11 generate the windows E32 and E33.

The controller 16 instructs the moving picture decoder 13 to begin preparations to play back the moving picture. The moving picture decoder 13 receives the instruction, and acquires encoded data of the moving picture to be played back from the moving picture input device 12. Furthermore, the moving picture decoder 13 acquires and analyzes information necessary for playback, such as an encoding scheme, the number of pixels and the number of frames.

When the above initialization process is completed, the controller 16 performs a process shown in FIG. 4. The controller 16 sends instructions for drawing the frame picture of the moving picture to be played back on the third window E33 to be drawn to the window system 11 first (step S41). When the controller 16 executes the process of the step S41 first after instruction of the moving picture playback, the controller 16 sends an instruction for drawing a picture of the top frame on the third window E33 to the window system 11.

The controller 16 instructs the window system 11 to access the timer after duration of the frame that drawing was instructed in the step S41 and registers the timer call (step S42). In case that the timer has a function for calling periodically, and all the durations of the frames are equal, when the timer is set once, it need not be set again while playback is performed.

The controller 16 performs timer call as needed, and instructs the moving picture decoder 13 to make the moving picture input device 12 acquire encoded moving picture data of the frame of the moving picture to be played back (step S43). The acquisition of the encoded moving picture data may be performed at a time when the moving picture decoder 13 decodes the shape and color information of each frame of the moving picture from the encoded moving picture data as follows.

For example, when the moving picture input device 12 receives the encoded moving picture data from a network connected to the moving picture playback apparatus 1, the moving picture playback apparatus 1 waits until the reception of the encoded moving picture data necessary minimally for playing back the frame picture to be played back is completed. When the encoded moving picture data is saved in a recording medium loaded in the moving picture playback apparatus 1, the encoded moving picture data of the frame to be displayed is read out from the recording medium.

The controller 16 waits for the timer call from the window system 11 (step S44). When the controller 16 receives the timer call, it updates the number of the frame from which the moving picture be played back (step S45). In this step S45, when the picture playback and the acquisition of the encoded moving picture data are performed according to the duration of the frame, and the timer is called in step S44, the frame to be played back is advanced by one frame number.

In a case of acquiring the encoded moving picture data by receiving it from a network, when the sufficient network capacity for receiving data of all frames cannot be retained, the frame number may be updated to the number of the latest frame by advancing the frame number in discontinuity to make much account of a real-time moving picture playback.

When the process of step S45 is completed, the process returns to step S41, the controller 16 instructs the window system 11 to draw the frame picture to be displayed on the third window E33. Then, a similar process is repeated.

As described above, the moving picture can be played back by updating the frame of the moving picture to be played back every duration of the frame defined by the encoded moving picture data. The process of FIG. 4 is not performed when the moving picture playback is paused or when the playback is completed.

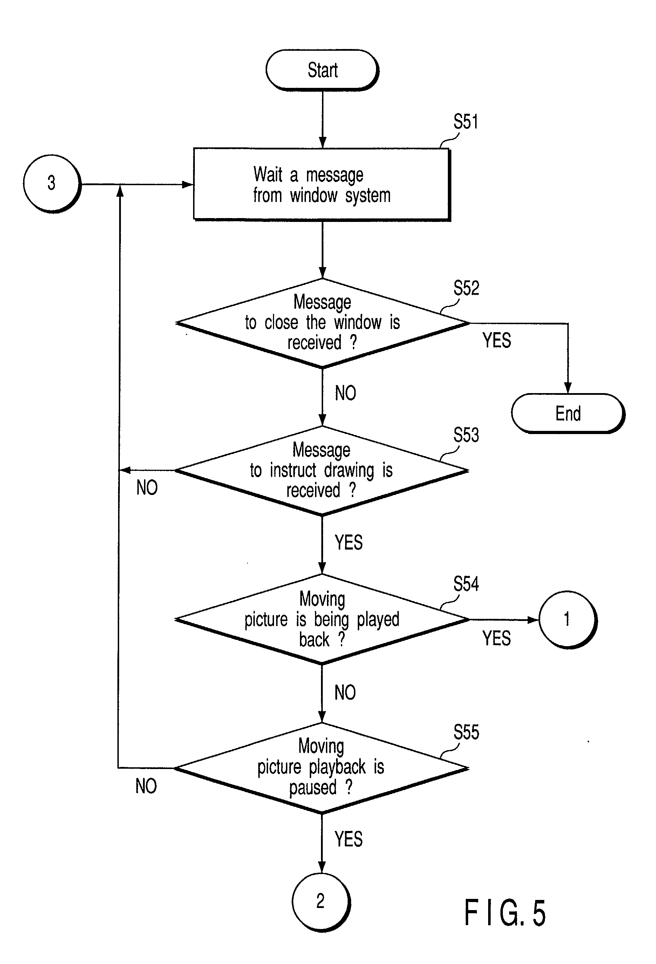

A procedure in which the controller 16 processes the message notified by the window system 11 is explained by referring to FIG. 5.

In step S51, the controller 16 waits for notification of the message from the window system 11, and executes a process of the following steps S52 to S55 according to the kind of notified message.

In step S52, when the controller 16 receives a message to close the window, the controller 16 finishes the process. Even if the controller 16 executes the process of FIG. 4 in this time, the controller 16 finishes the process.

In step S53, when the controller 16 receives an instruction message for instructing to draw on the third window E33, the controller 16 advances the process to step S54 and executes the drawing process. The drawing instruction message for the window E33 is generated by execution of step S41 of FIG. 4 or by the window system 11 based on a change of order in which the windows are overlapped or for other reasons. In step S53, when a received drawing instruction message is a message except for drawing instructions to the window E33, the process returns to the step S51.

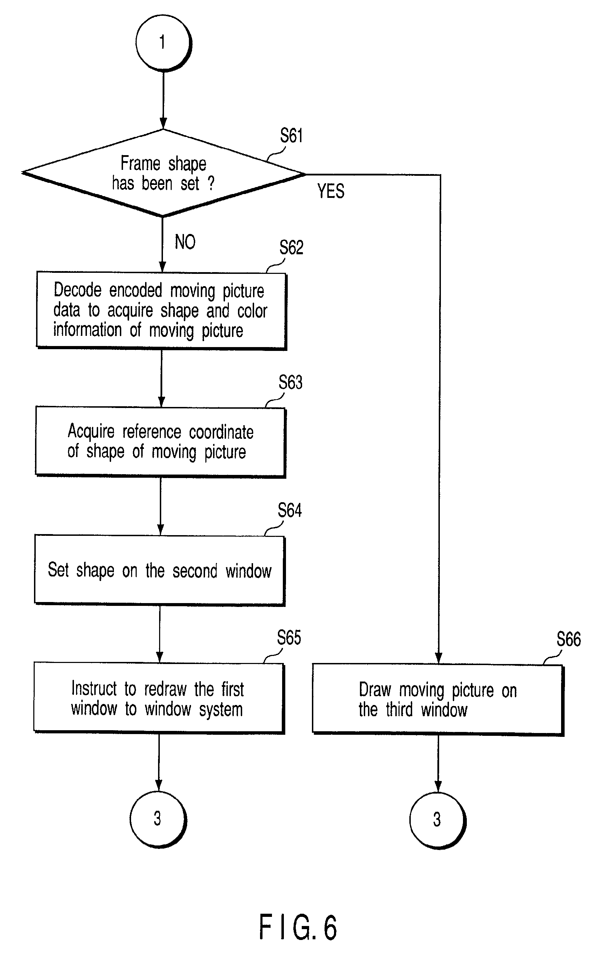

In step S54, when the moving picture is played back, the process advances to step S61 of FIG. 6 as described hereinafter. When the moving picture playback is paused in step 55, the process advances to step S81 as described hereinafter. When it is not in the play or pause state, for example, is an initial state or a stop state, the drawing process is not performed but the process returns to the step S51.

A concrete procedure of the drawing process during the moving picture playback is described referring to FIG. 6.

When the determination in step S54 of FIG. 5 is YES, that is, the process is the moving picture playback, the process advances to step S61 to determine whether the shape of each frame of the moving picture has been set. For example, at the time when the picture of a new frame is drawn on the third window E33 by drawing instructions of step S41 of FIG. 4, the shape of each frame is not yet set on the second window E32. In such a case, the process advances from step S61 to step 62, and the shape of each frame of the moving picture is set on the second window E32 by a process of steps S62 to S64.

At first, in step S62, the shape setting device 14 acquires shape information of every frame from the moving picture decoder 13. The moving picture decoder 13 acquires encoded moving picture data from the moving picture input device 12, and decodes the shape information and color information of every frame. The decoded information is returned to the shape setting device 14 and drawing device 15 according to their requests.

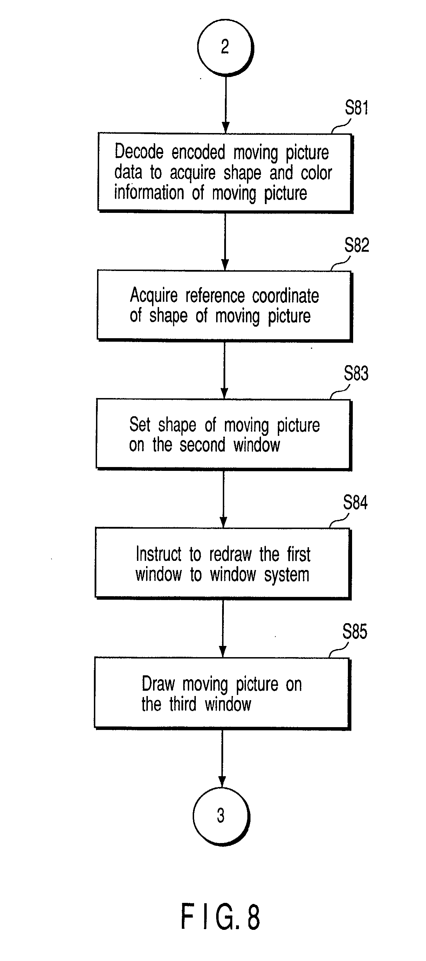

In step S63, the shape setting device 14 acquires a reference coordinate for designating the shape of the moving picture by a coordinate. A normal reference coordinate is fixed to (0, 0). On the basis of this reference coordinate, the shape setting device 14 converts the shape information of the moving picture every frame to the format defined by the window system 11. For example, when the reference coordinate at the upper left corner (a position of 0) of FIG. 7A is expressed as (bx, by) and the moving picture shown by E71 in FIG. 7A is expressed as a set of rectangles, the shape information is expressed by a sum set of three rectangles having a coordinate shown in FIG. 7B. FIG. 7B shows a coordinate of the upper left corner and lower right corner of each of the three rectangles.

In step S64, the shape setting device 14 sets the moving picture shape of FIG. 7A as a region of the second window E32 based on the coordinate information shown in FIG. 7B. This setting is performed by the shape setting device 14 which instructs the window system 11 to set the shape of each frame of the moving picture on the window E32.

In step S65, the shape setting device 14 sends an instruction for drawing again on the first window E31 to be superimposed with the moving picture to the window system 11. In response to the instruction, the window system 11 draws (redraws) on the first window E31 based on the software A in a region outside the shape set in the second window E32 by the shape setting device 14. As a result, even if the software A presumes that the shape of the moving picture to be displayed is rectangular, it is possible to display accurately the drawing contents based on the software A on the part of the first window E31 which is not hidden by the moving picture.

The process advances to step S51 of FIG. 5 after the process of step S65 when the moving picture shape is set in step S64. In step S51, the controller 16 receives the drawing instruction message from the window system 11 again and executes the process of step S61 through the process of steps S52 to S54. Since the shape of the moving picture to be displayed has been set in the step S64, the process advances from step S61 to step S66.

In step S66, the drawing device 15 acquires color information of the frame of the moving picture to be played back from the moving picture decoder 13, and instructs the window system 11 to draw the moving picture on the third window E33 based the color information. Thus, the picture of the frame on which the moving picture shape is set in step S64 is drawn according to the color information.

According to the present embodiment as described above, the controller 16 sends an instruction for setting the shape of each frame to the shape setting device 14 in playback of the moving picture. On the basis of this instruction, the shape setting device 14 sets the shape of each frame of the moving picture on the second window E32 via the window system 11. Thereafter, the controller 16 receives the drawing instruction message from the window system 11, and sends to the drawing device 15 an instruction for drawing the picture of the frame on which the moving picture shape is set by the shape setting device 14. On the basis of this instruction, the drawing device 15 draws the picture on the third window E33 via the window system 11. In this way, it is possible to display and play back the moving picture while superimposing it on the display picture based on the program A in the first window E31.

The first window E31 is drawn again after the moving picture shape of each frame is set in the second window E32, so that the display picture based on the program A and displayed on the first window E31 while being superimposed on the moving picture is not disturbed.

In a conventional method (a) of performing overwriting the drawing by the plug-in B directly on the window displayed by the software A, when the moving picture is played back by the plug-in B, if the moving picture shape is changed with playback of the moving picture, the display picture based on the software A is disturbed by the shape change of the moving picture. However, according to the present embodiment, the above problem can be solved by drawing again on the display picture based on the software A in the first window E31 after setting of the moving picture shape.

A method of displaying the moving picture during pause in the moving picture playback is described referring to FIG. 8.

If the moving picture playback pauses at the time when the controller 16 receives the drawing instruction message from the window system 11, the process advances from step S55 of FIG. 5 to step S81 of FIG. 8. In steps S81, S82 and S83, the moving picture shape is set at a time point when the moving picture playback is paused similarly to the process of steps S62, S63 and S64 of FIG. 6.

The software A has a function for returning the shape of the second window E32 to a rectangle during pause in the moving picture playback. Therefore, the controller 16 has to give an instruction for setting the moving picture shape to the shape setting device 14.

In step S84, the shape setting device 14 instructs redrawing to the first window E31 to be superimposed with the moving picture to the window system 11 similarly to the step S65 of FIG. 6. The contents drawn on the window E31 can be accurately displayed, even during pause in the moving picture playback.

In this case, the drawing device 15 acquires the color information of the frame of the moving picture to be played back from the moving picture decoder 13 without waiting for the message from the window system 11 in step S85, similarly to step S6 of FIG. 6. The drawing device 15 sends to the window system 11 an instruction for drawing the moving picture on the third window E33 based on the color information. As a result, the picture of the frame on which the moving picture shape is set in step S83 is drawn according to the color information.

According to the present embodiment as thus described, the moving picture can be accurately displayed even during pause in the moving picture playback as follows. For example, in a conventional method (b) of drawing by the plug-in B to a child window generated by the software A, even if the plug-in B sets the shape of the child window as a non-rectangle, there is a case that the software A returns the shape of the window based on the plug-in B to a rectangle in changing arrangement of the window based on the plug-in B and size of the window based on the software A. For this reason, the moving picture cannot be accurately displayed during pause in the moving picture playback.

In contrast, in the present embodiment, the shape setting device 14 sets the moving picture shape on the second window E32 in step S83 of FIG. 8 during pause in the moving picture playback. Thereafter, the color information is promptly drawn on the third window E33 again in step S85 via the redrawing instruction sent to the first window E31 in step S84 without waiting the message from the window system 11 in step S51 of FIG. 5 and without confirming the drawing instruction message in step S53. As a result, the moving picture is accurately displayed and played back.

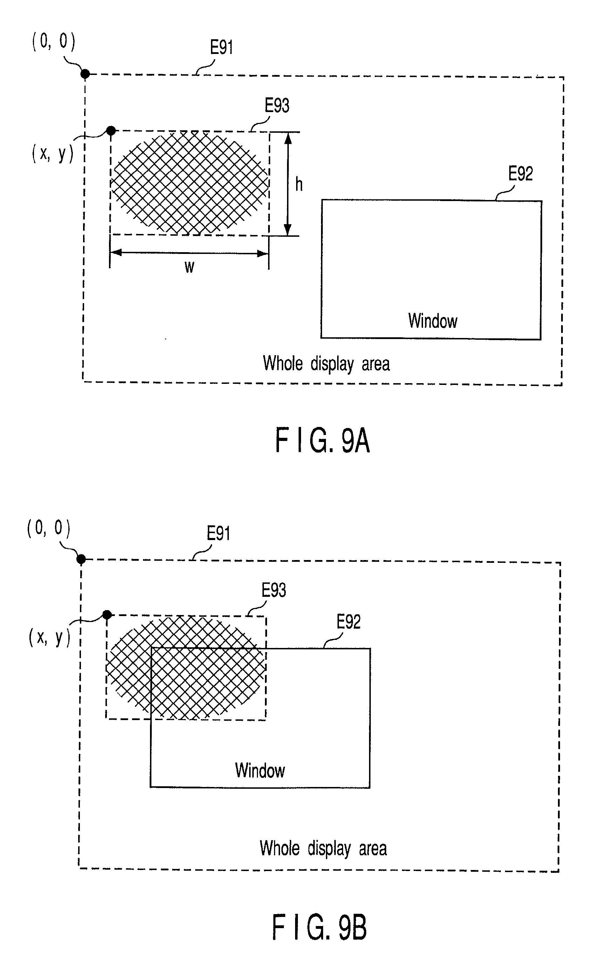

Finally, a method of accurately displaying and playing back the moving picture when the first window to be superimposed on the moving picture is scrolled is described in conjunction with FIGS. 9 to 11.

As shown in FIG. 9, in case that the software A draws and size of a display E91 to be superimposed with the moving picture is larger than that of the first window E92, one part of the display E91 can be displayed in the window E92 by scrolling the window E92. A rectangular region E93 shows a display region of the moving picture played back by the plug-in B. The coordinate (0, 0) on the upper left corner of the display E91 is a reference coordinate, the rectangular region E93 has an upper left corner at a coordinate (x, y) of x pixels right from the reference coordinate (0, 0) and y pixels downwards therefrom. The rectangular region E93 has a height of h pixels downward from the position of the coordinate (x, y) and a width of w pixels right therefrom.

When the first window E92 is scrolled, the rectangular region E93 is moved relatively with the window E92 while maintaining a position relative to the display E91. When the whole moving picture is outside the window E92, the moving picture is not displayed on the window E92 as shown in FIG. 9A. When one part or all of the moving picture is superimposed by the first window E92, only a part of the moving picture which is in a range of the window E92 is displayed as shown in FIG. 9B.

The second window on which the shape of each frame is set and the third window that the drawing is performed are arranged in the rectangular region E93 together. When the software A arranges the first window E92 with the position (x, y) relative to the reference coordinate (0, 0) corresponding to the upper left corner of the first display E91 being always kept at the coordinate (x, y), the moving picture can be displayed at the appropriate position of the window E92.

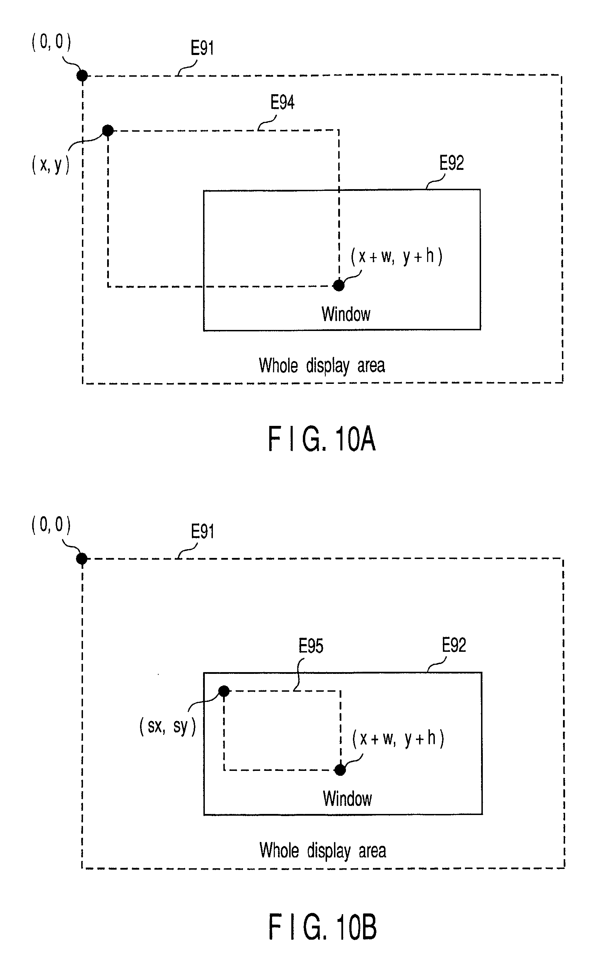

In the present embodiment, there is prepared a software for setting the second window in a range that it is received within the window E92 when the moving picture is arranged in the first window E92 on which the moving picture is superimposed. This software arranges the upper left corner of the third window E94 at the coordinate (x, y) in the display E91 having the reference coordinate (0, 0) at the upper left corner thereof as shown in FIG. 10A. Supposing that the third window E94 has a width of w pixels and a height of h pixels, the lower right corner of the window E94 is positioned at a coordinate (x+w, y+h).

With regard to the second window E95 on which the moving picture shape is set every frame, the software sets the coordinate of the upper left corner of the window E95 at a coordinate (sx, sy) relative to the reference coordinate (0, 0) corresponding to the upper left corner of the display E91, and the coordinate of the lower right corner in a coordinate (x+w, y+h) similarly to the third window E94 as shown in FIG. 10B. As thus described, it is necessary to set the relativity coordinate (sx, sy) so that the region of the second window E95 is included in the region of the first window E92.

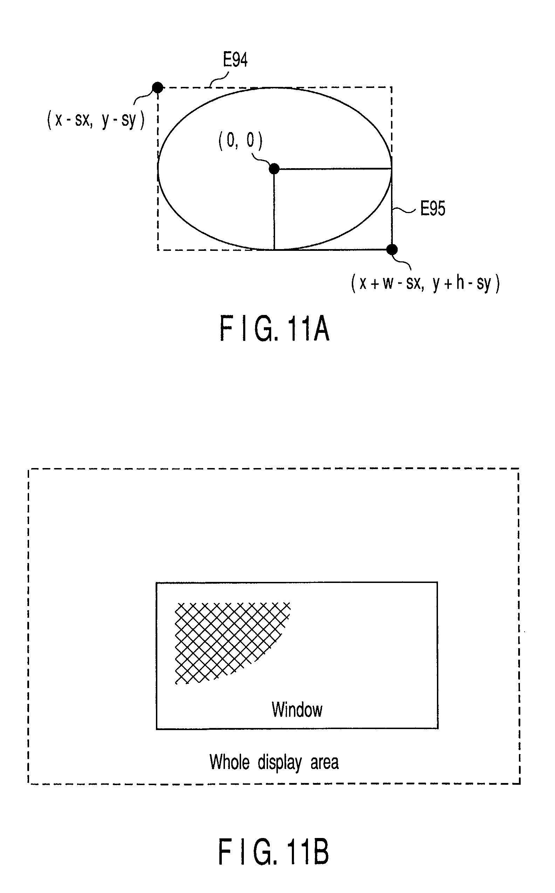

When setting the moving picture shape in the second window E95, the reference coordinate is not set at the same as the reference coordinate (0, 0) of the third window E94 that drawing is performed, but sets at (x-sx, y-sy) as shown in FIG. 11A. In other words, with regard to the coordinate (x, y) of the upper left corner of the third window E94, a relativity coordinate (x-sx, y-sy) relative to the coordinate (sx, sy) of the upper left corner of the second window E95 is obtained, and this relativity coordinate (x-sx, y-sy) is determined as a reference coordinate when the moving picture shape is set on the second window E95.

In setting of the shape every frame and drawing of a picture, the windows are superimposed on each other at the same coordinate, so that one part of the moving picture can be accurately displayed in the window E92 as shown in FIG. 11B even if the first window E92 is scrolled. Even if the first window E92 is not only scrolled, but also a position and size of the window E92 are changed, the moving picture can be displayed in the window E92.

In an arrangement of the window shown in FIGS. 2 and 3, the coordinate is sx = x, sy = y, and a reference coordinate is (0, 0). Accordingly, this method can be applied to the case of FIGS. 2 and 3.

In case that the first window E92 is scrolled, and a position and size of the window E92 are changed, the moving picture can be displayed at a correct position on the window E92 with being superimposed thereon.

The moving picture playback process according to the embodiment of the present invention can execute by software by means of a computer, such as a personal computer and an EWS (engineering work station), or a computer built into a mobile communication terminal.

Therefore, the present invention can provide a program to make the computer execute the above moving picture playback process and a computer readable recording medium storing the program.

According to the present invention as discussed above, the shape of each frame is set on the second window corresponding the child window of the first window superimposed with the moving picture, and the moving picture is drawn on the third window corresponding to the child window of the second window. As a result, the moving picture on which the shape changes every frame is superimposed on the display of the first window and displayed adequately thereon without disturbing the display of the first window.

## Claims

1. A moving picture playback method of playing back a moving picture including a plurality of frames **characterized by** comprising:
forming a first window based on a predetermined software;
forming a second window as a child window of the first window on the first window;
forming a third window as a child window of the second window;
setting a shape of each of the frames of the moving picture on the second window; and
drawing color information of the frame having the shape set on the second window on the third window.

2. A method according to claim 1, **characterized by** including setting the shape again after pause in the playback.

3. A method according to claim 1, **characterized by** including drawing the first window again after setting of the shape of the frame.

4. A method according to claim 1, **characterized in that** the first window includes characters and/or a still picture.

5. A moving picture playback apparatus for playing back a moving picture including a plurality of frames, the apparatus **characterized by** comprising:
input means (12) for inputting shape information and color information of the moving picture every frame;
window system means (11) for generating a first window based on a software, a second window corresponding to a child window of the first window and superimposed on the first window and a third window corresponding to a child window of the second window;
shape setting means (14) for setting a shape of each of the frames of the moving picture on the second window;
drawing means (15) for drawing on the third window a picture of the frame having the shape set on the second window; and
control means (16) for controlling the shape setting means (14) and the drawing means (15) according to a message from the window system to set the shape of each frame on the second window and draw the color information of the frame on the third window.

6. An apparatus according to claim 5, **characterized in that** in playing back the moving picture the controlling means (16) instructs the shape setting means (14) to set the shape and then instructs the drawing means (15) to draw the color information of the frame according to the message from the window system means (11).

7. An apparatus according to claim 5 or 6, **characterized in that** in pausing in the playback the controlling means (16) instructs the shape setting means (14) to set the shape and then instructs to draw the picture of the frame to the drawing means (15) without waiting the message from the window system means (11).

8. An apparatus according to any one of claims 5 to 7, **characterized in that** the setting means (14) instructs the window system means (11) to draw the first window again after setting of the shape.

9. An apparatus according to any one of claims 5 to 8, **characterized in that** the controlling means (16) calculates, as a coordinate of a upper left corner of the third window, a relativity coordinate relative to a coordinate of a upper left corner of the second window, and uses this relativity coordinate as a reference coordinate for setting the moving picture shape on the second window.

10. An apparatus according to any one of claims 5 to 9, **characterized in that** the input means (12) generates encoded moving picture data including the shape information and color information, and which further includes decoding means (13) for decode the encoded moving picture data and input the shape information and the color information to the shape setting means (14) and the drawing means (15) respectively.

11. An apparatus according to any one of claims 5 to 7, 9 and 10, **characterized in that** the shape setting means (14) sends an instruction to the window system means (11) and sets the shape based on the shape information on the second window designated by the controlling means (16) according to the message from the window system means (11).

12. An apparatus according to any one of claims 5 to 12, **characterized in that** a plug-in software of a predetermined software having the first window instructs generating of the third window to the window system means (11).

13. A carrier medium carrying computer readable instructions for controlling a computer to carry out the method of any one claims 1 to 4.
